# EUROPÄISCHE PATENTSCHRIFT

(11) **EP 0 405 231 B1**
(45) Veröffentlichungstag und Bekanntmachung des Hinweises auf die Patenterteilung: **31.08.1994**
(21) Anmeldenummer: 90111178.1
(22) Anmeldetag: 13.06.1990
(51) Int. Cl.: B60D 1/52

(54) **Deichsel für Anhängerfahrzeuge**
Towbar for vehicle trailers
Timon pour remorques de véhicules

(30) Priorität: 28.06.1989 DE 3921111
(43) Veröffentlichungstag der Anmeldung: 02.01.1991
(73) Patentinhaber: Ringfeder GmbH, 47829 Krefeld (DE)
(72) Erfinder: Schäfer, Horst-Dieter, D-4156 Willich 2 (DE); Wensing, Udo, D-4200 Oberhausen 11 (DE); Vandeweerd, Rolf, D-4130 Moers 1 (DE); Rossbach, Joachim, D-4060 Viersen (DE); Bonacker, Peter, D-4172 Straelen (DE)

(56) Entgegenhaltungen:
- DE-A- 2 703 772
- DE-U- 8 008 044
- FR-A- 2 472 099
- FR-A- 2 623 447
- US-A- 2 326 941
- US-A- 3 287 028

## Beschreibung

Die Erfindung betrifft eine Vorrichtung zum Befestigen einer Zugöse an einer Deichsel eines Anhängerfahrzeuges, insbesondere eines Zentralachsanhängers, im wesentlichen gebildet aus einer ein ösenteil und einen Schaft aufweisenden Zugöse und einem anhängerseitigen Deichselstück, wobei zum Befestigen der Zugöse am Deichselstück der Schaft der Zugöse und das Deichselstück jeweils einen Flansch aufweisen und an diesen einander zugewandten Flanschen lösbare Verbindungsmittel angreifen.

Durch DIN 74 053 Teil 1 Seite 3 ist eine Zugöse (Form D) mit einem Flansch bekannt, der parallel zur Längsachse des Zugösenschaftes angeordnete Durchgangsbohrungen aufweist. Ein Flansch des anhängerseitigen Deichselstückes hat entsprechende Bohrungen, so daß die Zugöse und das Deichselstück durch Schrauben miteinander verbindbar sind. Über die Schrauben müssen sämtliche Zugkräfte zwischen Motorfahrzeug und Anhänger und insbesondere bei Zentralachsanhängern auch erhebliche Stützkräfte übertragen werden. Eine Überbeanspruchung, die beispielsweise eintritt, wenn die Deichsel eines mehr als rechtwinklig zum Motorfahrzeug stehenden Zentralachsanhängers am Trägerwerk des Motorfahrzeuges anstößt, führt zu einer Lockerung der Schraubverbindungen wegen plastischer Verlängerung der Schraubenbolzen. Darin besteht ein Risiko für die Verkehrssicherheit.

Bei einer durch die FR-A-2 623 447 bekannten anderen Bauweise ist der mit einem Flansch versehene Schaft der Zugöse von einer Hülse der Deichsel umgeben, wobei der Außendurchmesser des Flansches und der Innendurchmesser der Hülse in etwa übereinstimmen. In dem Freiraum zwischen Schaft und Hülse befinden sich Füllstücke, die über quer zur Zugrichtung angeordnete Bolzen an der Deichselhülse befestigt sind und auf diese Weise in Zugrichtung einen Anschlag für den Flansch am Schaft der Zugöse bilden. Bei den im Fahrbetrieb auftretenden Zug- und Druckkräften werden die Bolzen nachteilig auf Scherung beansprucht.

Durch die US-A-2 326 941 gehört ferner eine Verbindung von Rohren für lösbare Baustrukturen aus Stahl zum Stand der Technik. Bei dieser Verbindung sind einander zugewandte Rohrenden von zwei Schalenkörpern umschlossen, die mit Hilfe von Schrauben gegen die äußere Umfangsfläche der Rohre verspannt werden. Die von den Schalenkörpern ausgeübten Klemmkräfte und die Reibungsverhältnisse zwischen den Schalenkörpern und den Rohrumfangsflächen sind bestimmend für die Größe der im Normalfall zu übertragenden Zugkräfte. Um die Rohrverbindung bei Überlastungen in Zugrichtung zu sichern, hat jedes Rohr an seinem Ende einen Flansch, der beispielsweise an einem in das Rohr eingeschweißten Stopfen gebildet ist, wobei diese Flansche in eine kreisringförmige Nut in der Mitte der Schalenkörper hineinragen.

Der Erfindung liegt die Aufgabe zugrunde, eine Vorrichtung der gattungsgemäßen Art auf möglichst einfache Weise so zu gestalten, daß hohe Zugkräfte und alle Stützkräfte - auch schwerster Zentralachsanhänger - einwandfrei und sicher übertragbar sind.

Diese Aufgabe wird erfindungsgemäß dadurch gelöst, daß als Verbindungsmittel die beiden Flansche umgreifende und mit diesen über zusammenwirkende konische Flächen axial und radial verspannbare Schalenkörper vorgesehen sind.

Im folgenden werden die Erfindung und deren in den Unteransprüchen genannten vorteilhaften Ausgestaltungen anhand eines in der Zeichnung dargestellten Ausführungsbeispieles näher beschrieben. Es zeigen
- Fig. 1: den vorderen Bereich einer Deichsel eines Anhängerfahrzeuges, in teilweise geschnittener Seitenansicht,
- Fig. 2: die Draufsicht zu Fig. 1,
- Fig. 3: die Vorderansicht zu Fig. 1 und 2.

Eine Zugöse 1 weist an ihrem vorderen Ende ein dem Anschluß an eine Anhängekupplung dienendes Ösenteil 1a und einen Schaft 1b auf, der am hinteren Ende der Zugöse 1 in einen Flansch 1c übergeht. Ein anhängerseitiges Deichselstück 2 ist mit einem dem Flansch 1c der Zugöse 1 zugewandten Flansch 2a versehen. Beide Flansche 1c und 2a werden von Schalenkörpern 3a umgriffen, die als Verbindungsmittel 3 dienen und im vorliegenden Beispiel jeweils nach Art einer Halbschale gestaltet sind.

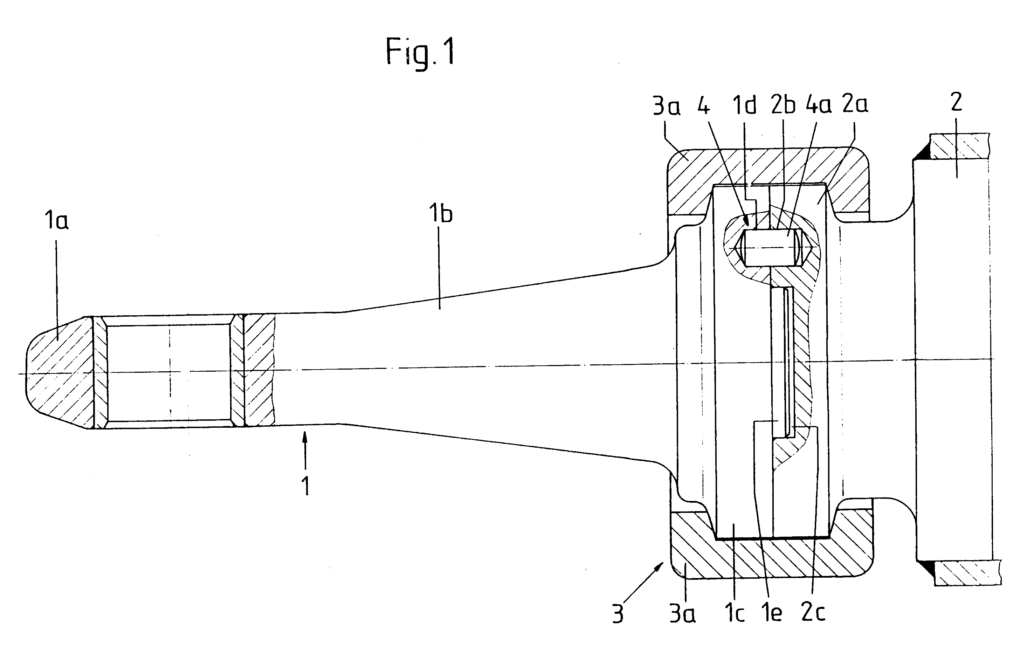

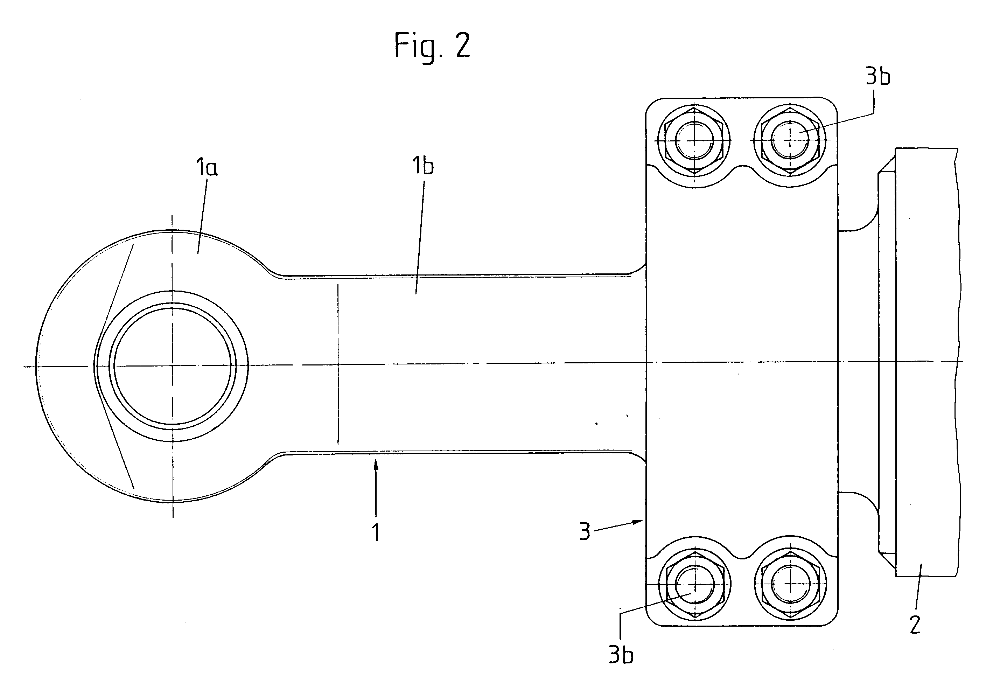

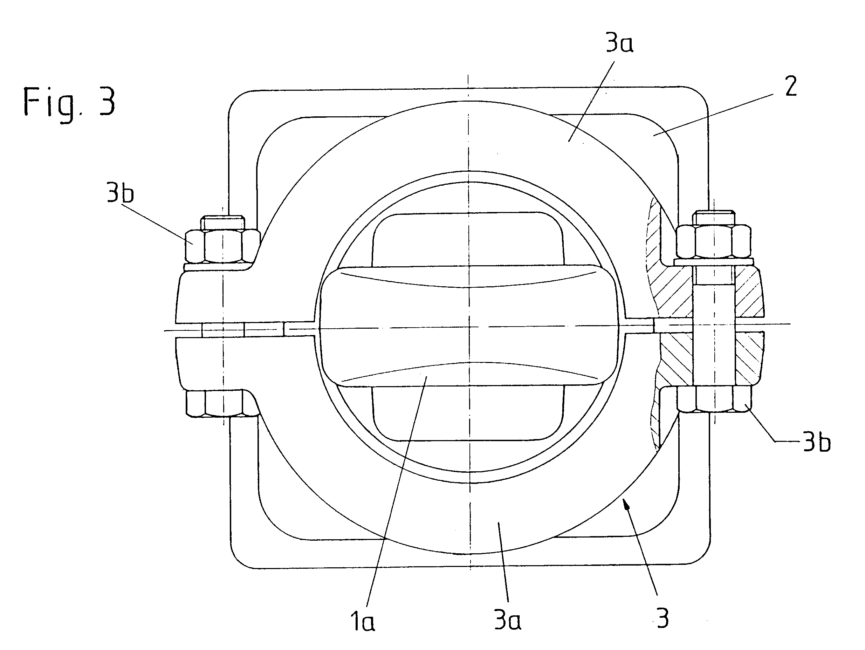

Wie aus Fig. 1 ersichtlich, sind die Flansche 1c und 2a sowie die im Querschnitt etwa U-förmigen Schalenkörper 3a mit zusammenwirkenden konischen Flächen versehen. Für die dadurch mögliche axiale und radiale Verspannung empfehlen sich die in Fig. 2 und 3 gezeigten tangential zu den Flanschen 1c und 2a angeordneten Schrauben 3b.

Die Zugöse 1 und das Deichselstück 2 sind aufgrund des Kraftschlusses aus der Verspannung auch in Umfangsrichtung zueinander gehalten. Zusätzlich ist im Bereich der Flansche 1c und 2a eine formschlüssige Verdrehsicherung 4 vorgesehen, die auch das Zusammenfügen erleichtert. Diese Verdrehsicherung 4 ist gemäß Fig. 1 durch jeweils eine außermittige, axiale Bohrung 1d bzw. 2b in den beiden Flanschen 1c und 2a und einen in diese Bohrungen 1d und 2b eingreifenden Bolzen 4a gebildet. Um große, auf die Zugöse 1 wirkende Stützkräfte formschlüssig übertragen zu können, sind die beiden Flansche 1c und 2a durch einen Scherzapfen 1e und eine Bohrung 2c (siehe Fig. 1) im Sinne einer Zentrierung verbunden.

Die mit der erfindungsgemäßen Vorrichtung ausgestattete Deichsel ist durch ihre ohne größeren Aufwand geschaffene Stabilität insbesondere für die Übertragung höchster Zugkräfte zwischen Motorfahrzeug und Anhänger sowie der Stützkräfte auch schwerster Zentralachsanhänger bestens geeignet, wobei die Schalenkörper auch Überbeanspruchungen standhalten. Die Deichsel ist mithin sicher.

## Patentansprüche

1. Vorrichtung zum Befestigen einer Zugöse an einer Deichsel eines Anhängerfahrzeuges, insbesondere eines Zentralachsanhängers, im wesentlichen gebildet aus einer ein ösenteil (1a) und einen Schaft (1b) aufweisenden Zugöse (1) und einem anhängerseitigen Deichselstück (2), wobei zum Befestigen der Zugöse (1) am Deichselstück (2) der Schaft (1b) der Zugöse (1) und das Deichselstück (2) jeweils einen Flansch (1c bzw. 2a) aufweisen und an diesen einander zugewandten Flanschen (1c, 2a) lösbare Verbindungsmittel (3) angreifen, dadurch gekennzeichnet, daß als Verbindungsmittel (3) die beiden Flansche (1c, 2a) umgreifende und mit diesen über zusammenwirkende konische Flächen axial und radial verspannbare Schalenkörper (3a) vorgesehen sind.

2. Vorrichtung nach Anspruch 1, dadurch gekennzeichnet, daß die Schalenkörper (3a) jeweils nach Art einer Halbschale gestaltet sind.

3. Vorrichtung nach Anspruch 1 oder 2, dadurch gekennzeichnet, daß die Schalenkörper (3a) durch tangential zu den Flanschen (1c, 2a) angeordnete Schrauben (3b) spannbar sind.

4. Vorrichtung nach einem der Ansprüche 1 bis 3, dadurch gekennzeichnet, daß die Zugöse (1) und das anhängerseitige Deichselstück (2) durch eine im Bereich der Flansche (1c, 2a) angeordnete Verdrehsicherung (4) zueinander fixiert sind.

5. Vorrichtung nach Anspruch 4, dadurch gekennzeichnet, daß die Verdrehsicherung (4) durch jeweils eine außermittige, axiale Bohrung (1d, 2b) in den beiden Flanschen (1c, 2a) und einen in diese Bohrungen (1d, 2b) eingreifenden Bolzen (4a) gebildet ist.

6. Vorrichtung nach einem der Ansprüche 1 bis 5, dadurch gekennzeichnet, daß die beiden Flansche (1c, 2a) durch einen Scherzapfen (1e) und eine korrespondierende Bohrung (2c) verbunden sind.

## Claims

1. A device to secure a trailer coupling ring to a towbar of a trailer vehicle, particularly a centre-axis trailer vehicle, substantially comprising a trailer coupling ring (1) having a ring part (1a) and a shank (1b), and a towbar part (2) on the trailer, wherein the shank (1b) of the trailer coupling ring (1) and the towbar part (2) have a respective flange (1c and 2a respectively) in order to secure the trailer coupling ring (1) to the towbar part (2), and releasable connecting means (3) engage on the said flanges (1c and 2a) which face one another, **characterized in that** shell-type bodies (3a) are provided as connecting means (3), and engage around the two flanges (1c, 2a) and are axially and radially clampable therewith via co-operating conical surfaces.

2. A device in accordance with claim 1, **characterized in that** the shell-type bodies (3a) are respectively formed in the manner of a half shell.

3. A device in accordance with claim 1 or 2, **characterized in that** the shell-type bodies (3a) are clampable via screws (3b) arranged tangentially to the flanges (1c, 2a).

4. A device in accordance with one of claims 1 to 3, **characterized in that** the trailer coupling ring (1) and the towbar part (2) on the trailer are secured to one another via means (4) for protection against torsion, arranged in the vicinity of the flanges (1c, 2a).

5. A device in accordance with claim 4, **characterized in that** the means (4) for protection against torsion is formed by a respective eccentric axial bore (1d, 2b) in the two flanges (1c, 2a), and a pin (4a) engaging in the said bores (1d, 2b).

6. A device in accordance with one of claims 1 to 5, **characterised in that** the two flanges (1c, 2a) are connected by a shear pin (1e) and a corresponding bore (2c).

## Revendications

1. Dispositif pour fixer un anneau d'attelage à une barre d'attelage d'une remorque de véhicule, notamment d'une remorque à essieu central, formé pour l'essentiel d'un anneau d'attelage (1) présentant un anneau (1a) et une tige (1b) et d'une barre d'attelage (2) située du côté de la remorque, sachant que pour fixer l'anneau d'attelage (1) à la barre d'attelage (2), la tige (1b) de l'anneau d'attelage (1) et la barre d'attelage (2) présentent chacun une bride (1a ou 2a) et que des moyens de liaison (3) amovibles sont en prise avec ces brides (1c, 2a) tournées l'une vers l'autre, caractérisé en ce que des coques (3a) entourant les deux brides (1c, 2a) et pouvant être assujetties axialement et radialement à celles-ci par le biais de surfaces coniques coopérant entre elles sont prévues en tant que moyens de liaison (3).

2. Dispositif selon la revendication 1, caractérisé en ce que les coques (3a) sont chaque fois réalisées à la manière d'une demi-coque.

3. Dispositif selon la revendication 1 ou 2, caractérisé en ce que les coques (3a) peuvent être assujetties par des vis (3b) disposées de manière tangentielle par rapport aux brides (1c, 2a).

4. Dispositif selon l'une des revendications 1 à 3, caractérisé en ce que l'anneau d'attelage (1) et la barre d'attelage (2) située du côté de la remorque sont fixes l'un par rapport à l'autre grâce à un dispositif de protection contre la torsion (4) disposé dans la zone des brides (1c, 2a).

5. Dispositif selon la revendication 4, caractérisé en ce que le dispositif de protection contre la torsion (4) est formé par un perçage axial (1d, 2b) excentré dans chacune des deux brides (1c, 2a) et par un boulon (4a) s'encastrant dans ces perçages (1d, 2b).

6. Dispositif selon l'une des revendications 1 à 5, caractérisé en ce que les deux brides (1c, 2a) sont reliées entre elles par un tenon (1e) et un perçage (2c) correspondant.
